**Europäisches Patentamt**

(19) **European Patent Office**

**Office européen des brevets**

(11) Publication number : **0 397 702 B1**

# (12) EUROPEAN PATENT SPECIFICATION

(45) Date of publication of patent specification :
**15.02.95 Bulletin 95/07**

(51) Int. Cl.⁶ : **F16F 9/46, B60G 17/08**

(21) Application number : **89901027.6**

(22) Date of filing : **15.12.88**

(86) International application number :
**PCT/US88/04478**

(87) International publication number :
**WO 89/05929 29.06.89 Gazette 89/14**

(54) **A VARIABLE RATE SHOCK ABSORBER AND SYSTEM THEREFOR.**

(30) Priority : **18.12.87 US 134497**
**18.12.87 US 135181**

(43) Date of publication of application :
**22.11.90 Bulletin 90/47**

(45) Publication of the grant of the patent :
**15.02.95 Bulletin 95/07**

(84) Designated Contracting States :
**DE FR GB**

(56) References cited :
**EP-A- 0 200 446**
**WO-A-85/04698**
**WO-A-87/07565**
**DE-C- 2 911 768**
**DE-C- 3 719 113**
**FR-A- 2 552 515**
**US-A- 4 463 839**
**US-A- 4 682 675**

(73) Proprietor : **AlliedSignal Inc.**
**101 Columbia Road**
**P.O. Box 2245**
**Morristown New Jersey 07962-2245 (US)**

(72) Inventor : **CASEY, Gary, Lee**
**3173 Roxbury**
**Troy, MI 48084 (US)**
Inventor : **HARVEY, Bruce, James**
**13311 Boca Grande Drive**
**Sterling Heights, MI 48077 (US)**

(74) Representative : **Bentz, Jean-Paul et al**
**Bendix Europe Service Techniques**
**Service Brevets,**
**126, rue de Stalingrad**
**F-93700 Drancy (FR)**

## Description

The present invention relates to an electrically responsive, variable rate shock absorber according to the preamble of claim 1.

Conventional shock absorbers are designed to provide low damping during compression and high damping during extension. The low damping, while desirable for driver comfort, detracts from drivability. To provide for increased drivability it is desirable to quickly dampen vehicle osillation.

It is desirable to be able to adaptively vary the damping characteristics of the various shock absorbers of a vehicle to improve its driveability and provide for increased passenger comfort. It has been suggested by prior systems that vehicle motion can be controlled by varying shock absorber damping in accordance with the vertical velocity of each wheel. Such control requires a plurality of sensors, at least one for each wheel, i.e. wheel and/or wheel-axle combination. If the wheel motion is to be controlled, in a real time manner, the sensors and related electromechanical devices must have a relatively high frequency response thus increasing system cost.

U. S. patent 4,463,839 by Masahiro is illustrative of an electrically controlled harmonic damper or shock absorber having a solenoid in the piston of the shock absorber. DE-A- 29 11 768 shows an electrically controlled mono-tube shock absorber corresponding to the preamble of claim 1.

Document EP-A-200 446 illustrates an automotive shock absorber having a piston like member defining active and reactive chambers. The damping of the shock absorber is controlled by modifying a plurality of orifices by controlling the axial movement of a member attached to a motor 31 or solenoid. This shock absorber utilizes a valve element 30 which selectively opens and closes a main passageway, however, even during instances when the main passageway is closed by the valve element, the active and reactive chambers continue to communicate with one another via the various pilot passageways.

Another variable rate shock absorber is disclosed in United States Patent 4,682,675 which includes a solenoid valve operative directly against a movable poppet valve. The solenoid valve when open and/or closed controls the motion of the poppet valve and hence the degree of communication between an upper and lower working chamber.

Document WO 87/075 625 discloses another adjustable shock absorber including a solenoid lodged within a piston thereof. The solenoid provides an electrical controllable flow means operable to control the actuation of a plurality of valve discs.

It is an object of the present invention to improve driveability and driver comfort. Another object of the present invention is to provide a variable rate shock absorber for a vehicle to permit such improvement. An additional object of the present invention is to control the shock absorber in a simple and straightforward manner in order to dampen the oscillatory motion of the vehicle.

Accordingly, the invention comprises a shock absorber for a vehicle according to claim 1.

The retainer and poppet valve cooperate to define a pressure chamber therebetween, wherein when the pressure of the fluid in the lower chamber is greater than the pressure in the upper chamber, and with the armature deactivated and positioned on the second valve seat, fluid within the lower chamber flows through the bleed passage into the pressure chamber to develop a force on the poppet valve urging it onto the first seat. When the armature is activated and positioned off of the second seat, fluid in the pressure chamber is communicated to the first chamber creating a pressure differential across the poppet valve urging it off from its seat permitting flow from the lower chamber to the upper chamber to thereby lessen the damping of the strut from the predetermined levels. When the pressure in the upper chamber is greater than the pressure in the lower chamber with the armature activated and positioned on the second valve seat, to prohibit flow through the second fluid passage, the increased pressure fluid acts upon the bottom of the poppet valve lying radially outside the first valve seat to urge same from the first valve seat to permit fluid to flow from the upper chamber to the lower chamber through lower passage and the first valve seat. With the armature activated and position off of the second valve seat pressurized fluid is permitted to flow through the second fluid passage into the pressure chamber to urge the poppet valve onto the first valve seat to restrict flow through the lower passage. The shock absorber can also be controlled by generating a first signal indicative of the vertical acceleration of the vehicle and by deriving, from the first signal, a second signal indicative of vehicle vertical velocity. The solenoid valve means is activated and deactivated based upon the sign of the velocity signal.

Many other objects and purposes of the invention will be clear from the following detailed description of the drawings.

## Brief Description of the Drawings

In the drawings:

FIGURE 1 schematically illustrates the present invention.

FIGURE 2 illustrates a cross-sectional view showing many of the major components of a shock absorber employing the present invention.

FIGURE 3 shows the location of vehicle mounted sensors.

FIGURE 4 illustrates a cross-sectional view of an alternate embodiment of a shock absorber.

**Detailed Description of the Drawings**

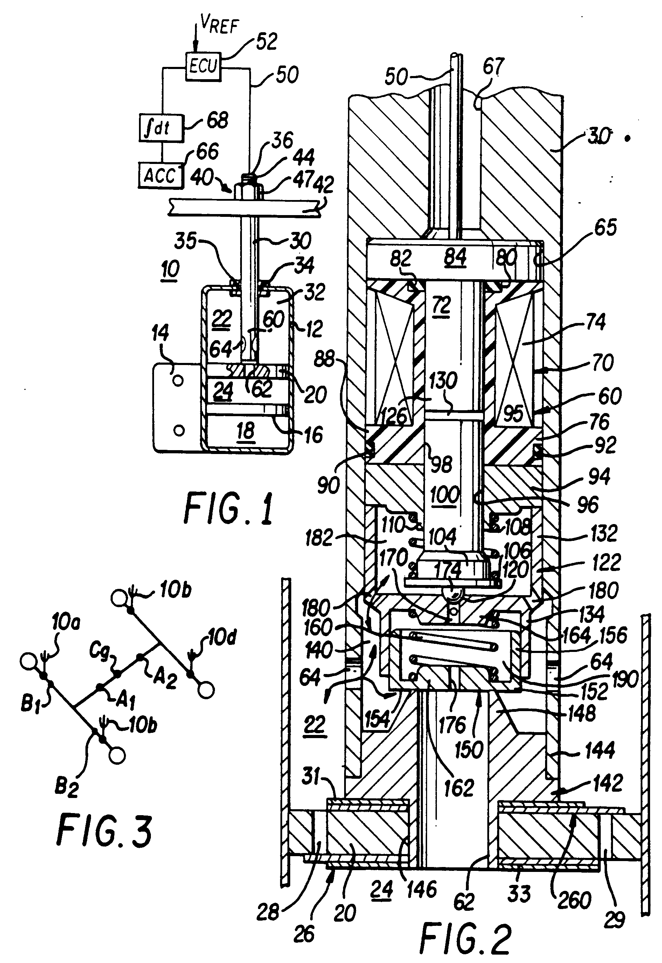

The variable rate shock absorber 10 shown in FIGURE 1 is a mono-tube type of shock absorber comprising an outer cylinder or casing 12 adapted to be secured to the unsprung mass of the vehicle such as a wheel or axle assembly by a bracket generally designated as 14. As is known in the art various attachment mechanisms can be substituted for the bracket 14. Typically shock absorbers of the type shown include a diaphragm 16 which encloses a gas filled chamber thereof forming an accumulator 18. Slidably received within the cylinder 12 is a piston 20 which separates the cylinder 12 into upper 22 and lower 24 fluid filled chambers containing a hydraulic fluid. Flap valves 26 and 26a (see FIGURE 2), of known construction are positioned on either side of the piston 20. The flap valves open and close one or the other of the narrow passages 28 and 29 to permit fluid to move between the chambers as the piston 20 moves up and down within the casing 12. The openings 28 and 29 and associated springs 31 and 33 constitute a throttle to dampen the motion of the piston 20 in a known manner. The piston 20 is moved by a strut 30 which extends through one end 32 of the casing 12. A seal 34 is disposed within an opening 35 in an end 32, of the strut 30, to prevent fluid from leaking out from the casing 12. The upper end 36 of the strut 30 is provided with means, generally shown as 40, for securing same to the sprung mass or vehicle body 42. Such means may include a narrow threaded portion 44 received through a portion of the vehicle body and secured thereto by a nut 47. The strut 30 is hollow to receive an electrical wire or cable 50. The cable 50 is connected to an electrical control unit (ECU) 52.

Situated within the strut 30, proximate the piston 20, is a valve generally shown as 60, such valve 60 is not visable in FIGURE 1 but is shown in detail in FIGURE 2. As explained below the valve 60 modifies the damping characteristics of the shock absorber 10 from that established by the flap valves 26 and 26a. A first opening 62 is provided through the piston 20 for communicating fluid from chamber 24 to the valve. The strut 30 further includes a plurality of openings or cross-holes 64 for communicating the upper chamber 22 to the valve 60. It is contemplated that the valve 60 has a bi-directional flow capability for permitting fluid to flow between passages 62 and 64 and the chambers 22 and 24 in order to change the overall damping characteristics of the shock absorber in response to a control signal. By controlling the effective fluid flow rate between chambers 22 and 24 the rate at which the piston 20 moves and hence the damping of the piston 20 can be varied. Additionally, by using the bi-directional valve 60 a relatively simple control philosophy can be used to stabilize the vertical oscillations of the vehicle. As an example, such control philosophy may employ an accelerometer 66 mounted to the vehicle and an integrator 68 used to obtain a velocity signal. After determining the direction of the velocity signal, the valve 60 can be appropriately opened and closed to vary the damping rate of the shock absorber 10 to dampen the vehicle vertical acceleration to zero.

Reference is again made to FIGURE 2 which illustrates a more detailed view of the solenoid valve 60 and shock abso-rber 10. As shown, the solenoid valve 60 is situated within a stepped bore 65 of the strut 30. The electrical wire/or cable 50 extends from the valve 60 through an axial passage 67. The valve includes a solenoid assembly generally shown as 70 comprising a stator 72 positioned within a coil 74 which may be wound about a plastic bobbin 76. An upper flange 78 of the bobbin includes a groove 80 for an O-ring 82 which bears against a radially extending flange 84 of the stator 72. The coil 74 is connected to the wire 50. The lower flange 76 of the bobbin may also include, at a circumferential edge 88 thereof, an annular groove 90 for receiving another O-ring 92. The O-ring 92 is urged against the inner wall of the strut 30 to prevent fluid from entering the coil space. Positioned below the flange 76 of the bobbin is a flux plate 94. The flux plate 94 includes a central opening 96 which is a coaxially disposed relative to a passage 98 in the bobbin 76. The solenoid assembly 70 further includes an armature 100 which is slidably received through the opening 96 of the flux plate 94 and partially extends, at one end 95 thereof, into the passage 98. The armature 100 further includes an enlarged end 104 defining a flange 106 for receiving a spring 108. The spring 108 is also received about a shoulder 110 formed in the flux plate and biases the armature outwardly from the stator 72 towards a valve seat 120 formed in a retainer 122.

The retainer 122 comprises a base plate 124 which is maintained by a wall 132, a fixed distance from a lower end 126 of the stator such that when the armature is urged against the base plate 124 an air gap 130 is formed between the armature 100 and stator 72. The wall 132 is tightly received relative to the inner wall of a bore 65. The retainer 122 further includes a second cylindrical wall 134 extending from the bottom of the plate 124 and is oppositely directed relative to the wall 132. The diameter of the wall 134 is narrower than the inner wall of the strut and forms, in corporation with the strut, an annular fluid passage 140. The strut, proximate the annular fluid passage 140, includes the openings 64 which, as previously mentioned, permit communication of hydraulic fluid between the chamber 22 and the valve 60.

Positioned below and spaced from the retainer 122 is a valve seat member 142 which joins the lower end 144 of the strut to the piston 20. The valve seat member 142 is received within an opening 146 within the piston 20 and defines the passage 62. The valve seat member further includes a valve seat 148 which as illustrated, comprises a flat, annular seating surface, the inner and outer diameters of which are less than the inner diameter of the wall 134.

Slidably positioned within the walls 134 of the retainer 122 is a pressure (force) responsive poppet valve 150. The poppet valve 150 includes a bottom member 152, the lower surface 154 of which forms a closure surface for seating upon the valve seat 148. The poppet valve further includes a wall 156 axially extending from the bottom 152 and sized to slidably engage the inner portion of the wall 134. One end of a spring 160 is received about a boss 162 formed in the bottom 152 of the poppet valve 150 and is received, at another end thereof, about another boss 164 axially extending from the base plate 124.

Extending through the base plate 124 and boss 164 of the retainer 122 is a flow passage 170 which terminates at the valve seat 120 and which is adapted to receive a valve closure element 174 such as a ball carried by the armature 100. The bottom 152 and boss 162 of the poppet valve 150, additionally include a bleed passage 176 which is narrower than the flow passage 170 as well as the passages 28 and 29. The retainer 122, proximate its base plate 124, includes a plurality of passages generally shown as 180 for communicating fluid received at the annular fluid passage 140 to a fluid chamber 182 formed by the retainer 122 and flux plate 94. Further, the retainer 122, and more specifically, the wall 134 and the poppet valve 150 cooperate to define a pressure chamber 190. As can be seen the poppet valve 150 forms a movable wall of such pressure chamber 190.

The damping of a normal shock absorber, is typically controlled by mechanisms similar to the flap valves 26 shown in FIGURE 2. The various springs and passages of these flap valves are typically sized such that the shock absorber is stiff in extension and soft in compression in an attempt to achieve a blend between controllability and driver comfort. As previously mentioned, it is one object of the present invention to enhance driveability while not sacrificing driver comfort. This is accomplished by reducing the vertical velocity of the vehicle to zero by controllably varying the damping of the shock absorber. More specifically, the solenoid valve of each shock absorber is controlled such that the shock absorber is in a high damping mode whenever the vehicle is moving upwardly or downwardly. Control of the vehicle motion can, most simply be accomplished by simultaneously or selectively activating and/or deactivating each solenoid valve 60 within each of the corresponding shock absorbers 10 in response to the output of a single accelerometer 66 or set of accelerometers such that when the vehicle moves upwardly the solenoid valve(s) 60 is activated and when the vehicle moves downwardly the solenoid valve(s) is deactivated to achieve the desired effect of increased damping. As will be seen from the discussion below, it is not necessary to be concerned with nor monitor the rapid motions of the various unsprung masses since their motions will automatically be damped by the action of the shock absorbers as described below.

It may be helpful to refer to the table below, which shows the various states of the solenoid valve 60, and its effect upon damping as a function of the compression and/or extension of the shock absorber 10.

| MOTION | VALVE 60 | EFFECTIVE DAMPING |
|---|---|---|
| Extension | OFF | LOW |
| | ON | HIGH |
| Compression | OFF | HIGH |
| | ON | LOW |

When the vehicle moves upwardly the vehicle its velocity is positive ($v \geqq o$) and the shock absorber will be in extension (unless the unsprung mass has a higher positive vertical velocity). Further, if the solenoid is ON the effective damping is HIGH. Similarily when the vehicle moves downwardly its velocity is negative ($v \leqq o$) and the shock absorber will be in compression (unless unsprung mass has higher negative velocity). If the solenoid is deactivated, i.e, turned OFF, the damping is correspondingly HIGH.

The control of the vehicle is accomplished by generating a signal indicative of vehicle velocity such as by measuring vertical acceleration with the accelerometer 66 and generating a signal indicative of the vehicle velocity v. One such means of obtaining velocity is to integrate the output from the accelerometer 68 (FIGURE 1). The velocity signal, is communicated to the ECU 52, of a known variety, wherein it is compared to a reference which causes the ECU 52 to generate a control signal activating and/or deactivating the coil 74. Control of the vertical acceleration of the vehicle may be accomplished by incorporating within the ECU logic such that when the vertical velocity is greater than or equal to zero ($v \geq o$) or some predetermined deadband the solenoid valve 60 is OFF and when the velocity is less than zero ($v < o$) or some predetermined deadband the solenoid valve is turned ON. In this manner, the damping rate of the shock absorber can selectively be made stiff in either extension and/or compression.

The mechanism for obtaining this damping control can be understood by considering the two operational modes of the solenoid valve 60 which may be selectively entered in correspondence with the velocity signal and ECU generated control signal.

The two operation modes are a) an active mode wherein a control signal is communicated to the coil 74 thereby causing the armature 100 to retract from the valve seat 120 permitting a restricted fluid flow through the passages 176 and 180 and b) a deactivated mode wherein continued flow through these passages is prohibited.

Consider the situation wherein the strut 30 is being moved out of the casing 12 as the vehicle moves upwardly. Such movement of the strut 30 and piston 20 compresses the fluid within chamber 22 causing the fluid to flow through the passages 28 to the flap valve 26. The now higher pressure fluid in chamber 22 also acts upon the bottom 154 of the poppet valve 150. Similarly, the lower pressure fluid in chamber 24 is communicated to passage 62. It can be seen that the pressure within the chamber 190 will stabilize at approximately the reduced pressure of the fluid within the lower chamber 24 by virtue of communication through the bleed passage 176. If the solenoid valve 60 is not activated (OFF) the pressure differential across the poppet valve 150 will urge it from valve seat 148 permitting a large volume of fluid to flow from the upper chamber 22, through passages 64 and 140 and into the lower chamber 24 through passage 62. As such, with the piston 20 moving upwardly and the solenoid valve 60 closed or OFF the damping of the shock absorber 10 is reduced from the higher damping set by the flap valve 26 by virtue of the increased flow.

Upon energizing the solenoid valve 60 the higher pressure fluid in the upper chamber 22 flows through passages 64, 140 and 180 into the pressure chamber 182 and thereafter into the pressure chamber 190 through passage 170. The now higher pressure in chamber 190, in concert with the spring 160 urges the poppet valve 150 onto its seat restricting the fluid flow between chambers 22 and 24. It should be recalled that the passage 176 is preferably narrower than the passage 170. As can be seen, during this period, fluid is permitted to flow into the lower chamber 24 through the narrow bleed passage 176. However, since the flow through the valve 60 is severely restricted the damping of the shock absorber will be at the increased (HIGH) damping level as substantially established by the flap valve 26.

In a similar manner it can be seen that as the piston 20 moves down in the casing 12 the lower chamber 24 will be pressurized. The fluid under pressure will migrate through passages 62 and 176 into the pressure chamber 190. If the solenoid valve is OFF, a pressure or force differential is created across the poppet valve 150 to urge it onto its seat 148 which severely restricts the further flow of fluid between the upper and lower chambers. With flow through the poppet valve essentially terminated the shock absorber damping will increase to a value substantially set by the flap valve 26a. Upon activation (ON) of the solenoid valve 60, the closure element 174 is moved from its valve seat 120 permitting increased fluid flow between the upper and lower chambers 22 and 24 through passages 62, 176, 170, 180, 140 and 64. Thereafter, the pressure in chamber 190 will tend toward the now lower pressure in the upper chamber 22 thereby creating a pressure or force differential across the poppet valve to urge it off from its seat, increasing the flow through the valve and reducing the damping of the shock absorber 10.

As mentioned above, an advantage of a control system using the present invention is that the vertical motion of the wheels need not be measured in order to correct and stabilize the motion of the vehicle. This can be seen from the following example: Assume that the control system has stabilized the vehicle vertical velocity ($v = o$). If during this condition the solenoid valve(s) 60 is activated, then if a particular wheel momentarily falls into a hole the shock absorber will extend. From the above table it can be seen that the damping of the shock absorber will be HIGH and will generate a force resisting the wheels' tendency to fall into the hole. If on the other hand, a particular wheel rolls over a bump it is desirable to isolate its upward motion from the vehicle. This is automatically accomplished since during compression, with the solenoid valve ON, a low damping force is created, thereby effectively isolating the vehicle from the upward motion of the wheel.

One of the advantageous features of the present invention is the ability of the solenoid valve to vary the damping of the shock absorber during all operative conditions. Implicit in the solenoid valve design is the isolation of the operation of a main electrically controlled valve i.e. the armature and associated components from the movement of the poppet valve 150. In prior electrically controlled poppet valves it is possible under certain high pressure conditions for the poppet valve to move against the main valve. This contact limits the motion of the poppet valve and essentially makes it inoperative. Such a situation cannot occur in the present invention.

The above described control system uses in its most simple form a single accelerometer to control the vertical velocity of the vehicle. In certain situations it may also be desirable to control the pitch and roll motions of the vehicle as well. This can simply be accomplished by adding additional sensors to the vehicle. As an example, pitch and vertical control can be affected by using accelerometers, positioned along or parallel to the axis of the symetry of the vehicle at locations $A_1$ and $A_2$ as shown in FIGURE 3. Full control of the vehicle's motion (vertical, pitch and roll) can be achieved by using accelerometer at locations $B_1$, $B_2$ and $A_2$ which may be used to control the front, (10a, 10b) and rear, (10c, 10d) shock absorbers.

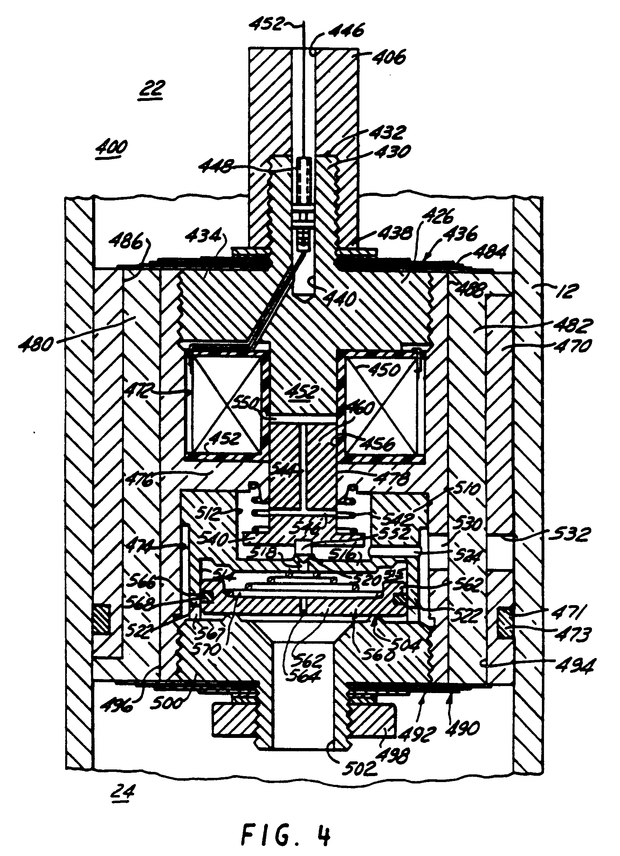

FIGURE 4 illustrates another embodiment of the invention. A strut 406 is received within a casing 12 in the same manner as is the shock absorber of FIGURE 1. Threadably received within a lower portion of the strut 406 and slidably received in the casing is a piston assembly generally shown as 420. The piston assembly divides the casing into upper 22 and lower 24 fluid filled chambers.

The piston assembly comprises a piston housing 470 including first and second stepped bores 472, 474. A cross member 476 having an opening 478 separates the bores 472 and 474. A solenoid assembly 422 is received in the piston housing 470. The solenoid assembly includes stator 426 threadably received in the bore 472. The stator defines an axially projecting member 430 extending from a radial flange 434, that is received within a portial bore 432 of the strut. A first flapper valve 436 is sandwiched between a lower portion 438 on the strut, the stator flange 434, and piston housing 470. The stator supports a connector assembly 448 within a blind bore 440. The bore 440 is coaxially positioned relative to a bore 446 which runs the length of the strut 406. The connector assembly 448 joins the ends of the wires of a coil 450 to another wire or cable 452 adapted to receive control signals. The coil 450 encircles an opposite extending member 452 of the stator. The coil is wound about a bobbin 454 which forms a passage 456 for receipt of an armature 460 such passage coaxial to the opening 478.

The piston housing 470 further includes, in an outer portion thereof, an annular groove 471 for receipt of a dynamic seal such as a piston ring 473. The piston housing 470 additionally includes multiple axial flow passages 480 and 482 respectively. The springs 484 of the flap valve 436 are positioned about the top end 486 of passage 480 to controllably restrict flow from the lower chamber 24 to the upper chamber 22 and to prohibit flow in the reverse direction. The portion 496 of passage 480 proximate the lower chamber is open to fluid flow. Another flap valve 490 is positioned upon the lower end of the piston housing 470, such flap valve 490 also includes a plurality of springs 492 closing lower portion 494 of passage 482 to controllably restrict flow from the upper chamber to the lower chamber and to prohibit flow in the reverse direction. The upper portion 488 of passage 482 is open to flow from the upper chamber 22.

A valve seat assembly generally shown as 500 is threadably received into the bore 474. The lower flap valve 490 can be appropriately secured to the valve seat assembly 500 and housing 470 by means of a retainer 498. The valve seat assembly includes a central bore or flow passage 502 and an annular upraised valve seat 504 which preferably defines a flat seating surface.

Positioned between the valve seat assembly 500 and the cross member 476 of the piston housing is a retainer generally shown as 510. The retainer is preferably manufactured of a hardened steel and includes upper 512 and lower 514 bores separated by a cross member 516 which includes a flow passage 518. Situated about the passage 518 or formed as a part thereof is valve seat 520 which is preferably conically shaped. The lower bore 514 is formed by a cylindrical, axially extending wall 522. The wall 522 is spaced from the inner walls of the bore 474. A relief passage 524 is formed in the retainer to communicate the bore 512 with the annular space 525 between the wall 522 and the bore 474. Also formed proximate the relief passage 524, within a portion of the piston housing 470, is an opening 530. The opening 530 communicates the space 525 and passage 482. Also formed within the piston housing 470 is a passage 532 which is a drill passage used to fabricate passage 530 and may be thought of as an extension of passage 530. The retainer further includes a plurality of opening 567 to permit fluid to flow to and from the space 525 into the cavity 514.

As previously mentioned an armature 460 is reciprocatively received within the opening 478 of the piston housing and within passage 456 of the bobbin 454. The armature includes a flange 540 adapted to receive a bias spring 542. The armature further includes an axially directed passage 544 which is communicated to bore 512 through a cross passage 546. The purpose of the passages 544 and 546 is to provide a leakage path for fluid which may become trapped within an air gap 550 formed between the stator 426 and the armature 460. Entrapped fluid in the air gap will modify the damping of the armature 460. Further, to enhance the magnetic qualities of the electromagnetic valve formed by the armature, stator and coil, the armature 460 is preferably fabricated of a silicon type iron and the stator of a sintered iron. The armature 460 further includes a hardened steel conically shaped closure element 552, which may be press-fit therein.

Positioned within the lower bore 514 of the retainer 510 is a poppet valve 560 forming therewith a chamber 515. The poppet valve includes an axial wall 562 and a thinner cross member 563. The cross member includes a narrow bleed passage 564 which is preferably narrower than the passage 518 formed in the retainer 510. The poppet valve 560 includes an annular groove 566 for receipt of a dynamic seal such as a piston ring 568. The cross member 563 and wall 562 form a shoulder upon which to receive a spring 570 to bias the poppet valve 560 upon the seat 504.

With the coil deactivated, and the strut and piston moving downwardly to compress the fluid in the lower chamber 24 such compressed fluid is also communicated upwardly through passage 502 to the lower surface of the poppet valve 560. Thereafter, the pressurized fluid migrates through the bleed passage 564 and into the upper portion of the bore 514. As can be seen from FIGURE 4, the effective area of the upper portion of the poppet valve formed by the cross member 563 and wall 562 is greater than the area of the lower portion of the poppet valve, interior of the valve seat 504, exposed to the fluid in the lower cavity 24. As such, a pressure force differential is created urging the poppet valve 560 onto its seat thereby prohibiting any additional flow between the upper and lower chambers. During this time the flap valve 436 restricts flow through passage 480 to establish a HIGH damping of the shock absorber.

If, during the time that the shaft 406 is moving downwardly it is desired to reduce the damping characteristics of the shock absorber from that established by the flap valve 436, the coil 450 is actuated. Upon activation of the coil 450 the armature 460 is urged toward the stator 426 opening passage 518 and communicating the chamber 514 to the upper chamber 22 through the relief passage 524, opening 530 and passage 482. Upon opening passage 518, the fluid pressure within the chamber 514 is reduced. In response to the pressure force the poppet valve 560 is urged upwardly from the valve seat 504 permitting a relatively large amount of fluid to flow from the lower chamber 24 through passage 502, the openings 567 in the retainer, opening 530 and passage 482.

If the strut 406 is moved upwardly, the fluid in the upper cavity 22 is compressed. With the coil deactivated, passage 518 is closed by operation of the closure element 552. Fluid within the bore 514 is permitted to bleed into the lower cavity 24 through the bleed passage 564 thereby stablizing the fluid pressure action on the top portion of the poppet valve to substantially that of the fluid pressure within the lower cavity. The now increased fluid pressure of the upper chamber 22 is communicated to the outer portion of the poppet valve which extends beyond the valve seat 504 urging same off of the valve seat 504 permitting an increased rate of fluid flow between the upper and lower chambers through passage 502 thereby decreasing the damping characteristics of the shock absorber. In order to increase such damping characteristics during upward strut motion, the coil 450 is activated permitting the higher pressure upper chamber fluid pressure to be communicated to the upper portions of the poppet valve 560 through the passage 518. As can be seen, the pressure forces acting across the poppet valve 560 are substantially higher on top and consequently the spring 572 urges the poppet valve once again onto its seat thereby prohibiting further flow between the upper and lower chambers through passage 502. Consequently, the damping of the shock absorber will revert to the high level of damping as established by the flap valve 490 which provides a restriction to the flow of fluid through the passage 482.

Many changes and modifications in the above described embodiment of the invention can, of course, be carried out without departing from the scope thereof. Accordingly, that scope is intended to be limited only by the scope of the appended claims.

## Claims

1.  A shock absorber (10) comprising:

    a casing (12), a piston (20; 420) for dividing the interior of the casing into upper and lower chambers (22,24) containing fluid, a plurality of flap valves (26,26a; 436,492) for damping in concert with openings in the piston the motion of the piston at predetermined levels in extension and compression, a valve seat member (142) defining a lower passage (62;502) for communicating fluid from the lower chamber (24) into the interior of the piston including at one end thereof a first valve seat (148;504); means (60) including a solenoid operated control valve having an armature (100;460) for selectively reducing the damping of the piston from the predetermined levels, characterized in that,

    the armature (100;460) is movable in response to an electromagnetic force to selectively and directly open and close a first flow passage (170;518) defining a second valve seat (120) at one end thereof; the first flow passage (170;518) being formed within a cross-member (164;516) of a retainer (122), the retainer (122;510) cooperating to define a first fluid chamber (182;524,530) about the armature and a second fluid passage (180; 524,530) for permitting fluid to flow between the first fluid chamber (182) and an annular passageway;

    the retainer (122,510) further including a wall (134;522) defining an open end, which is recessed to form the annular passageway (140;474) and which extends axially away from the cross-member (124;516);

a poppet valve (150;560), remote from the armature, and movable relative to the first valve seat (148;504), in response to a pressure differential thereacross, for controlling the flow of fluid through the lower passage (62;502), including a cylindrical wall (156) slidably received in the retainer wall (134;512), a bottom formed at one end of the cylindrical wall (156) including a narrow bleed passage (176;564) therethrough, the bleed passage being narrower than the second flow passage (180;518) of the retainer (122;510);

the retainer (122;510) and poppet valve (150;560) cooperating to define a pressure chamber (190;515) therebetween, wherein in response to the motion of the piston when the pressure of the fluid in the lower chamber (24) is greater than the pressure in the upper chamber (22) and with the armature deactivated and positioned on the second valve seat (120) fluid within the lower chamber (24) flows through the bleed passage (176;564) into the pressure chamber (190;515) to develop a force on the poppet valve urging it onto the first valve seat,

when the armature is activated and positioned off of the second valve seat (120), fluid in the pressure chamber (190;515) is communicated to the first chamber (190;515) creating a pressure differential across the poppet valve (150) urging it off from the first valve seat fluid flows from the lower chamber to the upper chamber to thereby lessen the damping of the strut from the predetermined levels;

and further, in response to the motion of the piston when the pressure in the upper chamber (22) is greater than the pressure in the lower chamber, with the armature (100;460) deactivated and positioned on the second valve seat to prohibit flow through the second fluid passage (170;518), the increased pressure fluid acts upon the bottom of the poppet valve lying radially outside the first valve seat to urge same from the first valve seat (148;504) fluid flows from the upper chamber to the lower chamber through the lower passage (62;502) to reduce the damping of the piston and with the armature activated and positioned off of the second valve seat (120), pressurized fluid flows through the second fluid passage (170;518) into the pressure chamber (190) to urge the poppet valve onto the first valve seat to restrict flow through the lower passage.

2. The shock absorber as defined in Claim 1 characterized in that the piston is attached to an end of a hollow strut (30) reciprocatively received in the casing and wherein a cross-hole is provided through the strut for communicating fluid to and from the upper chamber and to the annular passageway (140).

3. The shock absorber as defined in Claim 1 characterized in that the piston (20) includes a piston housing (470) including first (472) and second (474) opposing bores, the bores separated by a separating member (476) defining an opening (478), the second bore (474) communicated to the second passage (482) through an aperture (530); and wherein

a coil means (450;454) of the control valve, responsive to a control signal, is disposed with the first bore (472), comprising an electric coil (450) wound about a bobbin (454) including a central passage (456) coaxially disposed relative to the opening (478) in the separating member (476);

the armature (460) is reciprocatively received through the opening (478) of the separating member and partially received within the passage (456) of the bobbin (454);

the retainer (510) is received into the second bore (474), and includes a third bore proxirnate the opening (478), and an oppositely extending fourth bore (514), wherein the annular passage (525) is positioned between the second bore (474) and the retainer,

a valve seat assembly (500) is received within the second bore in abutting relation to a end of a cylindrical wall (522) portion of the retainer and includes an opening defining the lower passage (502), the valve seat assembly and retainer cooperating to define the pressure chamber (515), the valve seat assembly includes the first valve seat (504) thereon extending into the chamber (515);

a first spring (542) for urging the armature into sealing engagement with the second valve seat (520); and

wherein the poppet valve which is slidably received within the chamber (515), includes second seal means for forming a dynamic seal therebetween.

4. The shock absorber as defined in Claim 3 characterized in that the armature (478) is movable through a gap (552) relative to a stator (426) and includes means (544,546) for communication the gap (550) to the third chamber (512) so as to prevent the build-up of fluid and fluid pressure in the gap (552).

EP 0 397 702 B1

**Patentansprüche**

1. Stoßdämpfer (10) mit
einem Gehäuse (12), einem Kolben (20; 420) zum Unterteilen des Inneren des Gehäuses in eine obere und eine untere Kammer (22, 24), die ein Strömungsmittel enthalten, einer Vielzahl von Klappenventilen (26, 26a; 436, 492) zum Dämpfen der Bewegung des Kolbens auf vorgegebenen Niveaus beim Ausfahren und Einfahren zusammen mit Öffnungen im Kolben, einem Ventilsitzelement (142), das einen unteren Kanal (62; 502) bildet, um Strömungsmittel von der unteren Kammer (24) in das Innere des Kolbens zu leiten, der an einem Ende einen ersten Ventilsitz (148; 504) aufweist, und Einrichtungen (60), die ein solenoidbetätigtes Steuerventil mit einem Anker (100; 460) zum wahlweisen Reduzieren der Dämpfung des Kolbens von den vorgegebenen Niveaus aufweisen,
dadurch gekennzeichnet, daß
der Anker (100; 460) in Abhängigkeit von einer elektromagnetischen Kraft bewegbar ist, um wahlweise und direkt einen ersten Strömungskanal (170; 518) zu öffnen und zu schließen, der an einem Ende einen zweiten Ventilsitz (120) bildet, wobei der erste Strömungskanal (170; 518) mit einem Querelement (164; 516) eines Halters (122) versehen ist, der so zusammenwirkt, daß er eine erste Strömungsmittelkammer (182; 524, 530) um den Anker und einen zweiten Strömungsmittelkanal (180; 524, 530) bildet, so daß Strömungsmittel zwischen der ersten Kammer (182) und einem Ringkanal strömen kann;
der Halter (122, 510) des weiteren eine Wand (134; 522) umfaßt, die ein offenes Ende besitzt, das zur Bildung des Ringkanales (140; 474) ausgenommen ist und sich axial vom Querelement (124; 516) weg erstreckt;
ein auf- und abgehendes Ventil (150; 560) entfernt vom Anker und in Abhängigkeit von einer Druckdifferenz relativ zum ersten Ventilsitz (148; 504) bewegbar ist, um den Strömungsmitteldurchsatz durch den unteren Kanal (62; 502) zu steuern, und eine zylindrische Wand (156), die gleitbar in der Halterwand (134; 512) angeordnet ist, und einen Boden aufweist, der an einem Ende der zylindrischen Wand (156) ausgebildet ist und einen engen Auslaßkanal (176; 564) aufweist, der enger ist als der zweite Strömungskanal (180; 518) des Halters (122; 510);
der Halter (122; 510) und das auf- und abgehende Ventil (150; 560) zusammenwirken und dazwischen eine Druckkammer (190; 515) bilden, wobei in Abhängigkeit von der Bewegung des Kolbens, wenn der Druck des Strömungsmittels in der unteren Kammer (24) größer ist als der Druck in der oberen Kammer (22) und wenn der Anker deaktiviert und am zweiten Ventilsitz (120) angeordnet ist, Strömungsmittel innerhalb der unteren Kammer (24) durch den Auslaßkanal (176; 564) in die Druckkammer (190; 515) strömt und eine Kraft auf das auf- und abgehende Ventil ausübt, die dieses auf den ersten Ventilsitz preßt;
Strömungsmittel in der Druckkammer (190; 515) zur ersten Kammer (190; 515) geleitet wird, wenn der Anker aktiviert und vom zweiten Ventilsitz (120) abgehoben wird, wodurch eine Druckdifferenz über das auf- und abgehende Ventil (150) erzeugt wird, die dieses vom ersten Ventilsitz wegdrückt, so daß Strömungsmittel von der unteren Kammer zur oberen Kammer strömt und auf diese Weise die Dämpfung des Stoßdämpfers von den vorgegebenen Niveaus verringert; und
in Abhängigkeit von der Bewegung des Kolbens, wenn der Druck in der oberen Kammer (22) größer ist als der Druck in der unteren Kammer und der Anker (100; 460) deaktiviert und am zweiten Ventilsitz angeordnet ist, um einen Durchfluß durch den zweiten Strömungsmittelkanal (170; 518) zu verhindern, das unter erhöhtem Druck stehende Strömungsmittel auf den Boden des auf- und abgehenden Ventils, das radial außerhalb des ersten Ventilsitzes liegt, einwirkt, um dieses vom ersten Ventilsitz (148; 504) wegzudrücken, so daß Strömungsmittel von der oberen Kammer zur unteren Kammer durch den unteren Kanal (62; 502) strömt, um die Dämpfung des Kolbens zu reduzieren, während im aktivierten und vom zweiten Ventilsitz (120) wegbewegten Zustand des Ankers unter Druck stehendes Strömungsmittel durch den zweiten Strömungsmittelkanal (170; 518) in die Druckkammer (190) strömt, um das auf- und abgehende Ventil auf den ersten Ventilsitz zu pressen und den Durchfluß durch den unteren Kanal zu drosseln.

2. Stoßdämpfer nach Anspruch 1, dadurch gekennzeichnet, daß der Kolben an einem Ende einer Hohlstrebe (30) befestigt ist, die hin- und herbeweglich im Gehäuse angeordnet ist, wobei sich eine Querloch durch die Strebe erstreckt, um Strömungsmittel zu und von der oberen Kammer und zum Ringkanal (140) zu leiten.

3. Stoßdämpfer nach Anspruch 1, dadurch gekennzeichnet, daß der Kolben (20) ein Kolbengehäuse (470) aufweist, das eine erste (472) und eine zweite (474) gegenüberliegende Bohrung besitzt, wobei die Bohrungen durch ein Trennelement (476), das eine Öffnung (478) bildet, voneinander getrennt sind und die zweite Bohrung (474) mit dem zweiten Kanal (482) über eine Öffnung (530) in Verbindung steht;

9

eine Spuleneinrichtung (450; 454) des Steuerventils, die auf ein Steuersignal anspricht, in der ersten Bohrung (472) angeordnet ist und eine elektrische Spule (450) umfaßt, die um einen Spulenträger (454) gewickelt ist, der einen Zentralkanal (456) aufweist, welcher koaxial zur Öffnung (478) im Trennelement (476) angeordnet ist;

der Anker (460) hin- und herbeweglich von der Öffnung (478) des Trennelementes aufgenommen ist und sich teilweise im Kanal (456) des Spulenträgers (454) befindet;

der Halter (510) in der zweiten Bohrung (474) angeordnet ist und eine dritte Bohrung benachbart zur Öffnung (478) sowie eine sich in entgegengesetzter Richtung erstreckende vierte Bohrung (514) umfaßt, wobei der Ringkanal (525) zwischen der zweiten Bohrung (474) und dem Halter angeordnet ist; und

eine Ventilsitzeinheit (500) in der zweiten Bohrung angeordnet ist und gegen ein Ende eines zylindrischen Wandabschnitts des Halters stößt sowie eine Öffnung aufweist, die den unteren Kanal (502) bildet, wobei die Ventilsitzeinheit und der Halter zusammenwirken, um die Druckkammer (515) zu bilden, und die Ventilsitzeinheit darauf den ersten Ventilsitz (504) umfaßt, der sich in die Kammer (515) erstreckt;

eine erste Feder (542) zum Drücken des Ankers in Dichtungseingriff mit dem zweiten Ventilsitz (520) vorgesehen ist; und

das auf- und abgehende Ventil, das gleitend in der Kammer (515) angeordnet ist, zweite Dichtungseinrichtungen zur Ausbildung einer dynamischen Dichtung dazwischen umfaßt.

4. Stoßdämpfer nach Anspruch 3, dadurch gekennzeichnet, daß der Anker (478) durch einen Spalt (552) relativ zu einem Stator (426) bewegbar ist und Einrichtungen (544, 546) zum Verbinden des Spaltes (550) mit der dritten Kammer (512) aufweist, um den Aufbau von Strömungsmittel und Strömungsmitteldruck im Spalt (552) zu verhindern.

**Revendications**

1. Amortisseur (10) comprenant :

un carter (12), un piston 20,420) divisant l'intérieur du carter en chambres supérieure et inférieure (22,24) contenant le fluide une pluralité de clapets (26,126a;436,492) pour amortir,en relation avec les ouvertures prévues dans le piston le déplacement du piston à des niveaux prédéterminés en extension et en compression,un siège de soupape (142) définissant un passage inférieur (62,502) transmettant le fluide de la chambre inférieure (24) à l'intérieur du piston,comportant à l'une de ses extrémités un premier siège de soupape (148,504 ),un moyen (60) incluant une soupape à commande par solénoïde ayant une armature (100,460) pour réduire sélectivement l'amortissement du piston à partir de niveaux prédéterminés, caractérisé en ce que ,

l'armature (100,460) se déplace en réponse à une force électromagnétique pour ouvrir et fermer sélectivement et directement un premier passage de débit (170;518) qui est formé dans la traverse (164;516) d'une pièce de retenue (122) ,la pièce de retenue (122;510) agissant conjointement pour délimiter une première chambre de fluide (182, 524, 530) autour de l'armature et un deuxième passage de fluide (180, 524, 530) permettant au fluide de s'écouler entre la première chambre (182) et un passage annulaire ,

la pièce de retenue (122, 510) comportant en outre une cloison (134,522) délimitant une extrémité ouverte, qui est rétrécie pour former le passage annulaire (140; 474) et qui se développe axialement au-delà de la pièce (124, 516) ;

un clapet (150, 560),éloigné de l'armature et mobile par rapport au premier siège de soupape (148, 504) en réponse à une différence de pression de part et d'autre, pour commander le débit du fluide traversant le passage inférieur (62; 502) , comportant une cloison cylindrique (156) montée coulissante dans la cloison (134, 522) un fond formé à une extrémité de la cloison cylindrique (156) étant percé d'un orifice de purge étroit (176, 564) , l'orifice de purge étant plus étroit que le deuxième passage de fluide (180, 518) de la pièce de retenue (122; 510);

la pièce de retenue (122; 510) et le clapet (150;560 ) agissant conjointement pour délimiter une chambre de pression intermédiaire (190, 515, dans laquelle en réponse au déplacement du piston lorsque la pression dans la chambre inférieure (24) est plus grande que la pression dans la chambre supérieure (22),avec l'armature (100,460) désexcitée et positionnée sur le deuxième siège de soupape (120) ,le fluide de la chambre inférieure (24) s'écoule à travers l'orifice de purge (176, 564) dans la chambre de pression (190, 515) pour développer une force sur le clapet le pressant contre le premier siège de soupape,

lorsque l'armature est excitée et dégagée du deuxième siège de soupape (120), le fluide de la chambre de pression (190; 515) est transmis à la première chambre en créant une différence de pression

**10**

de part et d'autre du clapet (150) le déplaçant hors du premier siège de soupape pour que le fluide s'écoule depuis la chambre inférieure vers la chambre supérieure et de ce fait amoindrir l'amortissement de l'arbre depuis les niveaux prédéterminés;

et en outre, en réponse au déplacement du piston lorsque la pression dans la chambre supérieure (22) est plus grande que la pression dans la chambre inférieure, avec l'armature (100,460) désexcitée et positionnée sur le deuxième siège de soupape pour interdire le passage du fluide à travers le second passage (170;518),la pression de fluide accrue agit sur le fond du clapet reposant radialement à l'extérieur du premier siège de soupape (148, 504) pour l'écarter de celui-ci,et que le fluide s'écoule depuis la chambre supérieure vers la chambre inférieure à travers le passage inférieur (62; 502) pour réduire l'amortissement du piston et avec l'armature excitée et positionnée hors du deuxième siège de soupape (120),le fluide mis sous pression s'écoule au travers du deuxième passage de fluide (170;518) dans la chambre de pression (190) pour presser le clapet sur le premier siège de soupape et reistreindre le débit au travers du passage inférieur.

2. Amortisseur tel que défini dans la revendication 1, caractérisé en ce que le piston est fixé à une extrémité d'un arbre creux (30) monté pour autoriser un mouvement alternatif dans le carter et dans lequel est prévu un passage transversal pour la transmission du fluide en direction ou en provenance de la chambre supérieure et vers le passage annulaire (140).

3. Amortisseur comme défini dans la revendication 1, caractérisé en ce que le piston (20) comprend un logement (470) incluant un premier(472) et un deuxième (474) alésages opposés, les alésages étant séparés par une pièce de séparation (476) délimitant une ouverture (478), le deuxième alésage (474) étant relié au deuxième passage (482) à travers une ouverture (530), et dans lequel

une bobine (450;454) de la soupape de commande , répondant à un signal de commande , est disposée dans le premier alésage (472),comprenant un bobinage électrique (450) enroulé sur une bobine (454) comportant une ouverture centrale (456) disposée coaxialement par rapport à l'ouverture (478) de la pièce de séparation (476),

l'armature (460) est montée pour autoriser un mouvement alternatif à travers l'ouverture (478) de la pièce de séparation (476) et engagée partiellement dans le passage (456) de la bobine (454);

la pièce de retenue (510) est logée à l'intérieur du deuxième alésage (474) et comporte un troisième alésage à proximité de l'ouverture (478),et un quatrième alésage se développant à l'opposé, dans lequel le passage annulaire (525) est positionné entre le deuxième alésage (474) et l'élément de retenue;

un ensemble siège de soupape (500) est logé à l'intérieur du deuxième alésage en montage bout à bout avec l'extrémité de la cloison cylindrique (522) et comporte une ouverture délimitant le passage inférieur (502), l'ensemble siège de soupape et la pièce de retenue agissant conjointement pour délimiter la chambre de pression (515) ,l'ensemble siège de soupape comportant le premier siège de soupape (504) se prolongeant dans la chambre (515);

un premier ressort (542) pressant l'armature en contact étanche avec le deuxième siège de soupape (520);et

dans lequel le clapet qui est monté coulissant dans la chambre (515) ,inclut un deuxième dispositif d'étancheité formant un joint dynamique intermédiaire.

4. Amortisseur tel que défini dans la revendication 3, caractérisé en ce que l'armature (478) peut se déplacer dans un entrefer (550) par rapport à un stator (426) et comporte des moyens (544, 546) pour mettre en communication l'entrefer (550) avec la troisième chambre (512) de manière à éviter l'accumulation de fluide et sa montée en pression dans l'entrefer (550).

FIG. 1

FIG. 3

FIG. 2

FIG. 4